# EUROPEAN PATENT SPECIFICATION

(11) **EP 1 680 207 B1**
(45) Date of publication and mention of the grant of the patent: **06.07.2011**
(21) Application number: 04790229.1
(22) Date of filing: 08.10.2004
(51) Int. Cl.: B01D 53/04

(54) **METHOD AND APPARATUS FOR ADSORBING GAS, PARTICULARLY CO 2 AND/OR O 2**
VERFAHREN UND VORRICHTUNG ZUR ADSORPTION VON GAS, INSBESONDERE CO2 UND/ODER O2
PROCEDE ET APPAREIL D'ADSORPTION DE GAZ, EN PARTICULIER DE CO 2 ET/OU DE O 2

(30) Priority: 16.10.2003 IT MI20032001
(43) Date of publication of application: 19.07.2006
(73) Proprietor: ISOLCELL ITALIA S.P.A., I-39055 Laives (IT)
(72) Inventor: WEBER, Fabio, I-38010 Denno (IT); PRUNERI, Marco, I-39040 Ora (IT)
(74) Representative: Forattini, Amelia
(86) International application number: PCT/EP2004/011297
(87) International publication number: WO 2005/039739

(56) References cited:
- EP-A- 0 467 668
- US-A- 4 315 759
- US-A- 5 755 854
- PATENT ABSTRACTS OF JAPAN vol. 1995, no. 01, 28 February 1995 (1995-02-28) & JP 06 281219 A (MITSUBISHI ELECTRIC CORP), 7 October 1994 (1994-10-07)

## Description

The present invention relates to a method and an apparatus for adsorbing gas, particularly CO₂ and/or O₂.

A CO₂ or O₂ adsorber of the conventional type substantially has two steps: a first step, in which it is necessary to regenerate the active ingredient contained in the tank, usually charcoals of a special type but also other kinds of material, for example plastic-based ones; and a second step, in which the atmosphere of the environment to be treated circulates in a closed circuit in the tank that contains the regenerated active ingredient, so that it can retain selectively the gas, CO₂ or O₂, that it is intended to retain.

Once the active ingredient has been saturated by the gas to be adsorbed, it is regenerated again, extracting the retained gas, so that it is ready again for the next adsorption step.

In practice, the adsorbent active ingredient has a behavior that is similar to that of a sponge with respect to water: in a first step, in order to allow the sponge to adsorb an amount of water, it is necessary to "wring" it; once the sponge has been well-wrung, therefore subjected to a regeneration step, it is again capable of adsorbing the same amount of water.

Usually, these machines have at least two tanks, which work alternately on the environment to be treated: while the first tank, connected in a closed circuit to the environment from which the excess quantity of the gas to be removed, CO₂ and/or O₂, is to be extracted, by circulating the atmosphere inside it, selectively retains the gas, the second tank is regenerated, extracting, from the active ingredient, the gas that it had retained earlier.

In this manner, adsorbers may operate without cycle interruptions on the environment to be treated.

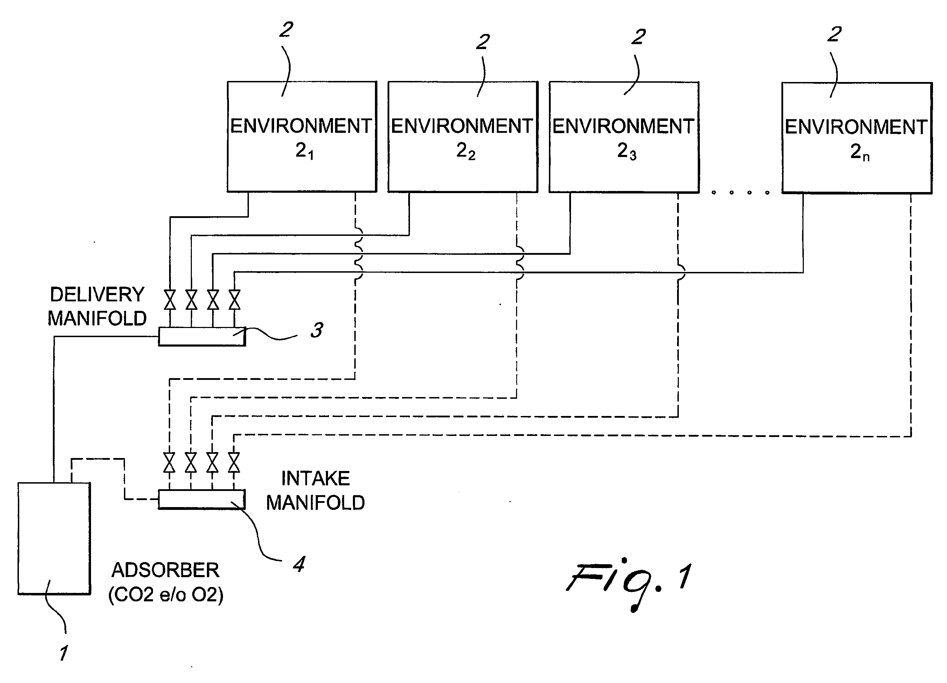

A common practice in the use of these adsorbers is to connect, by means of valves and piping, one machine to a plurality of environments, as shown schematically in Figure 1.

In this manner, generally by means of a computerized control system and priority management policies, the machine is made to operate in each instance on the environment that most needs intervention, for an appropriate time, before using it on the next environment.

EP-A-0467668 discloses a system for controlling the atmosphere of a container for use in the storage and/or transportation of perishable goods of the type described above.

The aim of the present invention is to provide a method and an apparatus for adsorbing gas, particularly for adsorbing CO₂ and/or O₂, that are improved with respect to the methods and apparatuses of the cited prior art.

An object of the invention is to provide a method that is capable of optimizing the active ingredient adsorption and regeneration time, as a function of the partial pressure of the gas to be adsorbed that is present in the mixture.

A further object of the invention is to provide a method and an apparatus capable of optimizing the yield of the adsorbent active ingredient as a function of the partial pressure of the gas to be retained and of the transit time of the gas over the active ingredient.

A further object is to provide a method and an apparatus that are capable of rendering the capacity of the machine insensitive to the load losses introduced by the pipes for connecting the machine to the environment to be treated.

A further object is to provide a method in which the gas mixtures are not transferred from one environment to another during machine switching, when it stops working on one environment and has to start working on the next. This is done in order to avoid contaminating the mixture that is present in one environment with a mixture that has different characteristics with respect to the one that is present in the environment or is otherwise different from the mixture required in the environment.

A further object is to provide a method, particularly for adsorbing CO₂, in which it is possible to choose whether to introduce, depending on the recorded and intended values of oxygen in the environment, at the end of the step for regeneration of the active ingredient tank, an additional step for "flushing" the tank with nitrogen.

This aim and these and other objects that will become better apparent hereinafter are achieved by a method and an apparatus for adsorbing gas, particularly CO₂ and/or O₂, as claimed in the accompanying claims.

Further characteristics and advantages of the invention will become better apparent from the following detailed description of preferred but not exclusive embodiments thereof, illustrated by way of non-limiting example in the accompanying drawings, wherein:
Figure 1 is a schematic view of an apparatus for adsorbing gas, particularly CO₂ and/or O₂, applied to a plurality of environments to be treated;
Figure 2 is a partial diagram of the apparatus according to the invention;
Figure 3 is a chart that plots the adsorption step in the apparatus according to the invention;
Figure 4 is a chart that plots the regeneration step in the apparatus according to the invention;
Figure 5 is a schematic view of the components of the apparatus according to one aspect of the invention;
Figure 6 is a schematic view of the components of the apparatus according to a further aspect of the invention.

With reference to the figures cited above, an apparatus according to the invention, generally designated by the reference numeral 1, can be connected to one or more environments, designated by the reference numerals 2₁₋ₙ, by means of a delivery manifold 3 and an intake manifold 4, in a per se known manner.

The apparatus is constituted for example by at least one tank that contains molecular sieves, or other adsorbent active ingredients, and is provided with an inlet and an outlet, a means adapted to regenerate the adsorbent material contained in the tank and connected to the inlet and optionally to the outlet, while the inlet is also connected to an environment 2₁₋ₙ from which oxygen or carbon dioxide is to be extracted by a ventilation means.

The ventilation means is connected to the environment 2₁₋ₙ by an inlet valve means, and the inlet is also connected to the external atmosphere by a valve means for external connection.

The outlet is connected to the environment 2₁₋ₙ by an outlet valve means.

The outlet may be connected to the external atmosphere by a connecting valve means.

The method for adsorbing oxygen and carbon dioxide includes a step for regenerating the adsorbent active material, which is typically performed by placing the adsorbent material in a vacuum, if it is an O₂ adsorber with molecular sieves, or by flushing it with external air, if it is a CO₂ adsorber based on activated charcoals or other adsorbent material; this is followed by an adsorption step, in which air is aspirated from the environment and sent to the tank and in which the air that exits from the tank returns to the environment with a reduced content of oxygen and/or carbon dioxide, by the action of the molecular sieves, or activated charcoals or other adsorbent material, inside the tank.

Then, in the case of an O₂ adsorber, there is a compensation step, during which air is drawn from outside and first sent into the tank and then into the environment, after being at least partially purified from the oxygen, in order to restore the volume of O₂ extracted by the system during the preceding step.

The method and apparatus for adsorbing CO₂ and/or O₂ have been improved, according to the present invention, also on the basis of some physical considerations that can be summarized as follows.
1) A quantity of adsorbent ingredient is capable of adsorbing a certain quantity of gas before saturating. Therefore, once the adsorbent ingredient is saturated, it must be regenerated before it can retain other gas again.
2) The capacity of the active ingredient to retain a particular gas depends on the partial pressure of the gas inside the mixture in which it is present.
3) The capacity of the active ingredient to retain a particular gas depends on the rate at which the mixture flows through the active ingredient.
4) The capacity of the active ingredient to retain a particular gas depends on the temperature of the mixture to which it is subjected.
5) The capacity of the active ingredient to retain a particular gas depends on the temperature of the active ingredient.
6) The capacity of the active ingredient to retain a particular gas depends on the presence of other interfering gases in the mixture, with respect to which the adsorbent ingredient may have adsorption preference with respect to the gas that one intends to retain.

According to a first aspect of the invention, the method and the apparatus have been improved by optimizing the active ingredient adsorption and regeneration time, as a function of the partial pressure of the gas to be adsorbed that is present in the mixture.

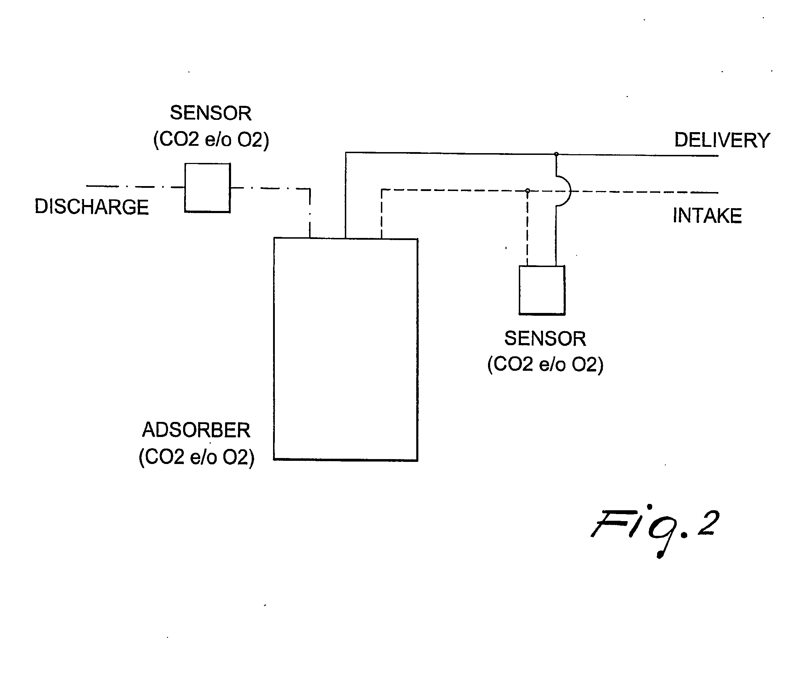

For this purpose, the apparatus according to the invention includes a sensor 5, which measures the partial pressure of the gas to be adsorbed in input, optionally a sensor 6 that measures the partial pressure of the gas in output from the machine, as shown schematically in Figure 2.

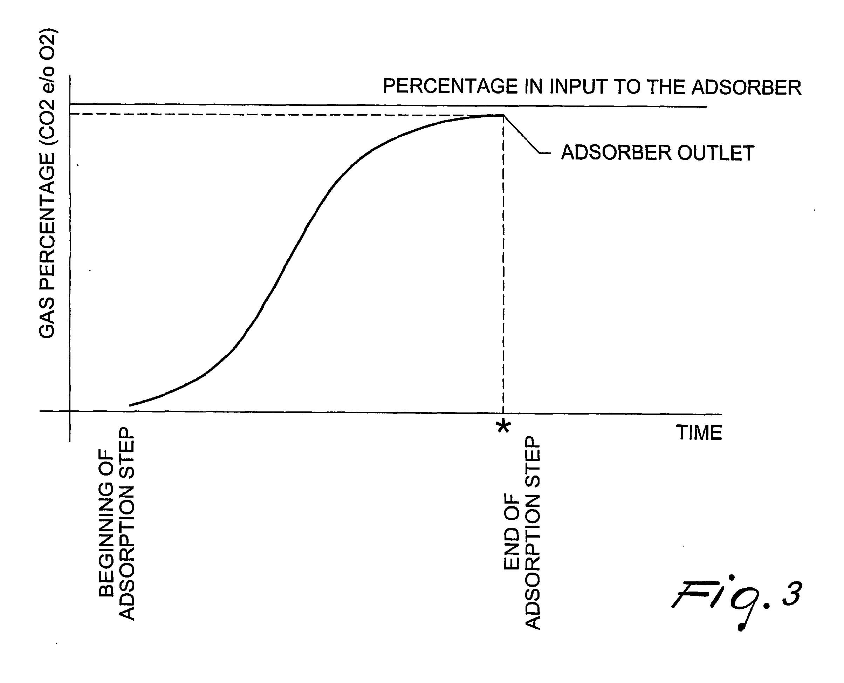

In this manner, it is possible to check when the active ingredient saturates and exhausts its capacity to adsorb the gas; and therefore it is possible to start regeneration only when it is really necessary, as shown in the chart of Figure 3.

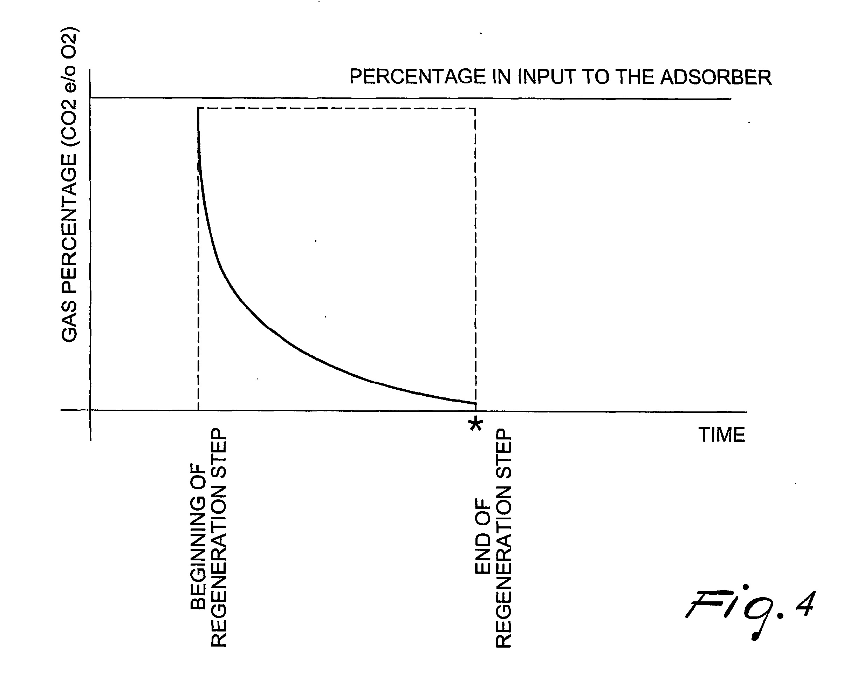

In the same manner, i.e., by measuring the partial pressure of the gas extracted by the active ingredient during the regeneration step, on the discharge of the machine, it is also possible to optimize, by extending or shortening it, the duration of the step for regenerating the active ingredient, as shown in the chart of Figure 4.

According to another aspect of the invention, the yield of the adsorbent active ingredient has been optimized as a function of the partial pressure of the gas to be retained and of the transit time of the gas through the active ingredient.

This improvement has been achieved by introducing a system for controlling the flow-rate of air on the adsorbent active ingredient.

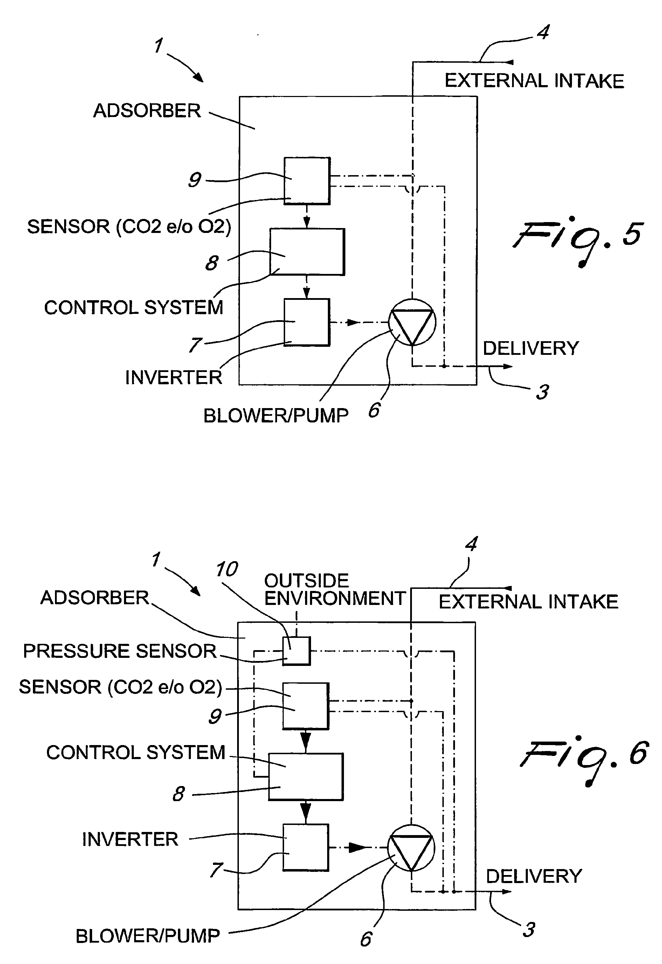

As shown in Figure 5, flow-rate control can be provided for example by driving the pump or blower 6 for circulating the gas through an inverter 7, which adjusts the flow-rate as a function of the partial pressure, measured by a sensor 9 for detecting the gas to be adsorbed, of the mixture in input to the machine.

The apparatus is preferably provided with a microprocessor system 8 which, by analyzing the input gas, controls the inverter 7 for driving the blower 6.

According to a third aspect of the invention, the capacity of the apparatus has been rendered insensitive to the load losses introduced by the piping that connects the machine to the environment to be treated.

This improvement has been achieved by measuring, by means of a differential pressure sensor 10, also the difference in pressure between the ambient air outside the circuit of the machine and the pressure in the delivery pipe thereof when the machine is operating and is connected to the environment on which it must work in a closed circuit, as shown in Figure 6.

The pressure difference allows to control the extent of the load losses caused by the length and cross-sections of the connecting piping.

The load losses introduce a reduction in the capacity of the system and a consequent increase in the transit time of the mixture over the active ingredient.

This capacity reduction and increase in transit time is again compensated by using an inverter that drives the blower and/or by varying the adsorption and regeneration times of the active ingredient.

According to a fourth aspect of the invention, gas mixtures are not transferred from one environment to the other during the switching of the apparatus, when it stops work on one environment 2 and must start work on the next environment.

This is done to avoid contaminating the mixture that is present in one environment 2 with a mixture that has different characteristics with respect to the mixture that is present in the environment or is otherwise different from the mixture required in the environment.

This improvement is introduced simply by ensuring that the switching between one environment to be treated and the other always occurs only at the beginning of the adsorption step of a tank, i.e., when the active ingredient of the tank that will work on the environment has been regenerated completely and therefore contains no residual contaminant from the work performed earlier on another environment.

According to another aspect of the invention, particularly if the apparatus is used as a CO₂ adsorber, it is possible to choose whether to introduce, as a function of the oxygen values that are recorded and intended in the environment, at the end of the step for regenerating the active ingredient tank, another step for "flushing" the tank with nitrogen.

Typically, the regeneration of the charcoals of a CO₂ adsorber occurs by flushing with air that is external to the treated environment, which by having a CO₂ content of less than 0.1% adsorbs the CO₂ retained earlier by the tank, allowing to provide a regeneration cycle that is extremely low in cost and extremely effective.

The freshly regenerated tank is regenerated with respect to CO₂ but is saturated with oxygen at 20.9%, i.e., the percentage that is present in the air used to flush the charcoals.

This oxygen contained in the tank is then sent to the environment on which the adsorber works, as soon as the tank is connected to the environment and the next step of adsorption of CO₂ thereof begins.

This becomes a problem when the adsorber is used to adsorb CO₂ from a fruit storage cell and the values of CO₂ and oxygen to be maintained are particularly low, typically CO₂ < 1%, O₂ < 1.2%.

In this case, the need to keep the CO₂ at a low level forces the adsorber to operate intensively, but a certain unwanted amount of oxygen is introduced in the cell in every regeneration step, contrasting with the need to also keep the oxygen value low.

Therefore, the introduction of a step for flushing the regenerated tank with nitrogen prevents the machine from introducing the unwanted oxygen in the cell.

The choice whether to introduce the step for flushing with N₂, as a function of the intended oxygen value and the value that is present in the environment to be treated, allows to minimize the production of nitrogen to the amount that is actually necessary and therefore to reduce the costs for maintaining the required atmosphere in the treated environment.

In practice it has been found that the invention achieves the intended aim and objects, providing a method and an apparatus for adsorbing gas, particularly for adsorbing CO₂ and/or O₂, that are improved with respect to the methods and apparatuses of the cited background art.

The apparatus and the method according to the invention are susceptible of numerous modifications and variations, all of which are within the scope of the inventive concept; all the details may further be replaced with technically equivalent elements.

Naturally, the materials used, as well as the dimensions, may be any according to requirements and to the state of the art.

## Claims

1. An apparatus for adsorbing gas, particularly CO₂ and/or O₂, comprising at least one tank that contains adsorbent material and is provided with an inlet and an outlet, a vacuum or ventilation means adapted to regenerate said adsorbent material in said tank and connected to said inlet and optionally to said outlet; said inlet being connected to an environment from which said oxygen and/or said carbon dioxide is to be extracted, by a ventilation means; said ventilation means being connected to said environment by an inlet valve means; said inlet being connected to the outside atmosphere by a valve means for external connection; said outlet being connected to said environment by an outlet valve means and being optionally connected also to the outside environment by a valve means; **characterized in that** it comprises a means for measuring the partial pressure of the gas to be adsorbed in input and optionally the partial pressure of the gas in output from the apparatus and optionally of the discharge of the apparatus.

2. The apparatus according to claim 1, **characterized in that** it comprises a means for controlling the flow-rate of the air over the adsorbent active ingredient, which is constituted by an inverter adapted to adjust the flow-rate of a blower/pump as a function of the partial pressure measured by a sensor in the mixture in input to the machine of the gas to be adsorbed.

3. The apparatus according to claim 2 **characterized in that** it comprises a microprocessor system which, by means of the analysis of the gas in input, controls the inverter that drives the blower.

4. The apparatus according to claim 1, **characterized in that** it comprises a differential pressure sensor, adapted to measure the difference in pressure between the ambient air outside the circuit of the machine and the pressure in the delivery pipe thereof, when said apparatus is operating and is connected to the environment on which it is designed to work in a closed circuit.

5. The apparatus according to one or more of claims 2, 3, **characterized in that** said inverter drives said blower/pump in order to compensate the reduction of the flow-rate and the increase in the transit time.

6. A method for adsorbing gas using an apparatus described in one or mode of claims 1-5, particularly CO₂ and O₂, comprising:
a step of regenerating the adsorbent material;
an adsorption step, in which air is aspirated from an environment and sent to the tank and in which the air that exits from the tank returns to the environment with a reduced content of oxygen and/or carbon dioxide by way of the action of the adsorbent material inside the tank;
a compensation step, in the case of an O₂ adsorber, in which air is drawn from outside and first sent into the tank and then into the environment, after being at least partially purified of the oxygen, in order to restore the volume of oxygen extracted by the system during the preceding step;
**characterized in that** it further comprises:
measuring the partial or percentage pressure of the gas to be adsorbed in input and/or output, for checking when the active ingredient saturates and exhausts its capability to adsorb the gas; and then to start the regeneration only when it is actually necessary; and
measuring the discharge of the apparatus, for measuring the partial pressure of the gas extracted by the active ingredient, in order to also optimize the time of the step for regenerating the active ingredient.

7. The method according to claim 6, **characterized in that**
it further comprises a step of controlling the flow-rate of air over said adsorbent active ingredient, wherein the flow-rate of a blower/pump is adjusted as a function of the partial pressure, in the mixture in input to the apparatus, of the gas to be adsorbed.

8. The method according to claim 6, **characterized in that** it comprises a step of measuring a differential pressure in order to also measure the difference in pressure between the ambient air outside the circuit of the machine and the pressure in a delivery pipe thereof when it is operating and is connected to the environment on which it is designed to work in a closed circuit, in order to control the extent of the load losses caused by the length and cross-sections of the connecting pipes.

## Patentansprüche

1. Vorrichtung zur Adsorption von Gas, insbesondere von CO₂ und/oder O₂, umfassend zumindest einen Behälter, der Adsorptionsmaterial enthält und mit einem Einlass und einem Auslass versehen ist, eine Vakuum-oder Ventilationseinrichtung, die für die Regeneration des Adsorptionsmaterials in dem Behälter ausgebildet und mit dem Einlass und optional mit dem Auslass verbunden ist, wobei der Einlass mit einer Umgebung verbunden ist, der durch die Ventilationseinrichtung der Sauerstoff und/oder das Kohlendioxid zu entziehen ist, wobei die Ventilationseinrichtung durch eine Einlassventilvorrichtung mit der Umgebung und der Einlass durch eine Ventilvorrichtung für eine externe Verbindung mit der Außenatmosphäre verbunden ist, wobei der Auslass durch eine Auslassventilvorrichtung mit der Umgebung und durch eine Ventilvorrichtung optional auch mit der Außenumgebung verbunden ist, **dadurch gekennzeichnet, dass** die Vorrichtung ein Mittel zum Messen des Partialdrucks des zu adsorbierenden Gases beim Eingang und optional des Partialdrucks des Gases beim Ausgang aus der Vorrichtung und optional des Ausstoßes der Vorrichtung umfasst.

2. Vorrichtung nach Anspruch 1, **dadurch gekennzeichnet, dass** diese ein Mittel zum Steuern der Strömungsrate der Luft über den aktiven Bestandteil des Adsorbens umfasst, das durch einen Inverter gebildet wird, der ausgebildet ist für die Einstellung der Strömungsrate eines Gebläses / einer Pumpe als eine Funktion des Partialdrucks, der beim Einleiten des zu absorbierenden Gases in die Maschine durch einen Sensor in dem Gemisch gemessen wird.

3. Vorrichtung nach Anspruch 2, **dadurch gekennzeichnet, dass** diese ein Mikroprozessorsystem umfasst, das mittels einer Analyse des Gases beim Eingang den Inverter steuert, der das Gebläse antreibt.

4. Vorrichtung nach Anspruch 1, **dadurch gekennzeichnet, dass** diese einen Differenzialdrucksensor umfasst, der ausgebildet ist für das Messen der Differenz zwischen dem Druck der Umgebungsluft außerhalb des Kreislaufs der Maschine und dem Druck in ihrem Ablaufrohr, wenn die Vorrichtung in Betrieb ist und mit der Umgebung verbunden ist, in der sie für die Arbeit in einem geschlossenen Kreislauf ausgebildet ist.

5. Vorrichtung nach einem oder mehreren der Ansprüche 2, 3, **dadurch gekennzeichnet, dass** der Inverter das Gebläse / die Pumpe antreibt, um die Reduktion der Strömungsrate und die Erhöhung der Laufzeit auszugleichen.

6. Verfahren zur Adsorption von Gas mit einer Vorrichtung gemäß einem oder mehreren der Ansprüche 1 bis 5, insbesondere von CO₂ und/oder O₂, umfassend:
einen Schritt der Regeneration des Adsorbens;
einen Adsorptionsschritt, in welchem Luft aus der Umgebung angesaugt und in den Behälter geleitet wird und in welchem aus dem Behälter austretende Luft mit einem durch das Adsorbens in dem Behälter reduzierten Sauerstoff- und/oder Kohlendioxidgehalt in die Umgebung zurückkehrt;
einen Kompensationsschritt im Falle eines O₂-Adsorbens, in welchem Luft von außen angesaugt und zunächst in den Behälter und dann in die Umgebung geleitet wird, nachdem zumindest teilweise von dem Sauerstoff gereinigt wurde, um das Volumen des Sauerstoffs wiederherzustellen, der dem System während des vorhergehenden Schritts entzogen wurde;
**dadurch gekennzeichnet, dass** das Verfahren weiterhin umfasst:
das Messen des Partialdrucks oder prozentualen Drucks des zu adsorbierenden Gases beim Eingang und/oder Ausgang, um zu überprüfen, wann der aktive Bestandteil gesättigt ist und seine Kapazität,
das Gas zu adsorbieren, erschöpft ist, und um dann die Regeneration nur zu starten, wenn sie tatsächlich notwendig ist; und
das Messen des Ausstoßes der Vorrichtung, um den Partialdruck des durch den aktiven Bestandteil extrahierten Gases zu messen, um auch die Zeit des Schrittes für die Regeneration des aktiven Bestandteils zu optimieren.

7. Verfahren nach Anspruch 6, **dadurch gekennzeichnet, dass** dieses einen Schritt der Steuerung der Strömungsrate der Luft über den aktiven Bestandteil des Adsorbens umfasst, wobei die Strömungsrate eines Gebläses / einer Pumpe als eine Funktion des Partialdrucks beim Eingang des zu adsorbierenden Gases in die Vorrichtung in dem Gemisch eingestellt wird.

8. Verfahren nach Anspruch 6, **dadurch gekennzeichnet, dass** dieses einen Schritt des Messens eines Differenzdrucks umfasst, um auch die Differenz zwischen dem Druck in der Umgebungsluft außerhalb des Kreislaufs der Maschine und dem Druck in ihrem Ablaufrohr zu messen, wenn die Maschine in Betrieb ist und mit der Umgebung verbunden ist, in der sie für eine Arbeit in einem geschlossenen Kreislauf ausgelegt ist, um das Ausmaß der Ladeverluste zu messen, die durch die Länge und die Querschnitte der Verbindungsrohre verursacht werden.

## Revendications

1. Appareil pour l'adsorption de gaz, en particulier de CO₂ et/ou de O₂, comprenant au moins une cuve qui contient un matériau adsorbant et qui est munie d'une entrée et d'une sortie, un moyen de dépression ou de ventilation adapté pour régénérer ledit matériau adsorbant dans ladite cuve et relié à ladite entrée et éventuellement à ladite sortie; ladite entrée étant reliée à un environnement à partir duquel ledit oxygène et/ou ledit dioxyde de carbone doit être extrait, par un moyen de ventilation; ledit moyen de ventilation étant relié audit environnement par un moyen de vanne d'entrée; ladite entrée étant reliée à l'atmosphère extérieure par un moyen de vanne pour le raccordement externe; ladite sortie étant reliée audit environnement par un moyen de vanne de sortie et étant éventuellement reliée également à l'environnement extérieur par un moyen de vanne; **caractérisé en ce qu'**il comprend un moyen pour mesurer la pression partielle du gaz devant être adsorbé en entrée et éventuellement la pression partielle du gaz en sortie de l'appareil et éventuellement de l'évacuation de l'appareil.

2. Appareil selon la revendication 1, **caractérisé en ce qu'**il comprend un moyen pour commander le débit de l'air sur l'ingrédient actif adsorbant, qui est constitué par un inverseur adapté pour ajuster le débit d'une soufflerie/pompe en fonction de la pression partielle mesurée par un capteur dans le mélange en entrée de la machine du gaz devant être adsorbé.

3. Appareil selon la revendication 2, **caractérisé en ce qu'**il comprend un système à microprocesseur qui, au moyen de l'analyse du gaz en entrée, commande l'inverseur qui entraîne la soufflerie.

4. Appareil selon la revendication 1, **caractérisé en ce qu'**il comprend un capteur de pression différentielle, adapté pour mesurer la différence de pression entre l'air ambiant extérieur au circuit de la machine et la pression dans le tuyau de distribution de celle-ci, quand ledit appareil fonctionne et qui est relié à l'environnement pour lequel il est conçu pour fonctionner dans un circuit fermé.

5. Appareil selon l'une ou plusieurs des revendications 2 à 3, **caractérisé en ce que** ledit inverseur entraîne ladite soufflerie/pompe afin de compenser la réduction du débit et l'augmentation du temps de transit.

6. Procédé pour l'adsorption de gaz utilisant un appareil décrit dans l'une ou plusieurs des revendications 1 à 5, en particulier de CO₂ et de O₂, comprenant :
une étape de régénération du matériau adsorbant;
une étape d'adsorption, dans laquelle de l'air est aspiré à partir d'un environnement et envoyé à la cuve et dans laquelle l'air qui sort du réservoir retourne vers l'environnement avec une teneur réduite en oxygène et/ou dioxyde de carbone au moyen de l'action du matériau adsorbant à l'intérieur de la cuve ;
une étape de compensation, dans le cas d'un absorbeur d'O₂, dans laquelle de l'air est aspiré à partir de l'extérieur et est d'abord envoyé dans le réservoir et ensuite dans l'environnement, après avoir été au moins partiellement purifié de l'oxygène, afin de rétablir le volume d'oxygène extrait par le système durant l'étape précédente ;
**caractérisé en ce qu'**il consiste en outre à:
mesurer la pression partielle ou en pourcentage du gaz devant être adsorbé en entrée et/ou en sortie, pour vérifier si l'ingrédient actif est saturé et a épuisé sa capacité à adsorber le gaz ; et pour commencer ensuite la régénération uniquement quand elle est réellement nécessaire ; et
mesurer l'évacuation de l'appareil, pour mesurer la pression partielle du gaz extrait par l'ingrédient actif, afin d'optimiser également la durée de l'étape de régénération de l'ingrédient actif.

7. Procédé selon la revendication 6, **caractérisé en ce qu'**il comprend en outre une étape consistant à commander le débit de l'air sur ledit ingrédient actif adsorbant, où le débit d'une soufflerie/pompe est ajustée en fonction de la pression partielle, dans le mélange en entrée de l'appareil, du gaz devant être adsorbé.

8. Procédé selon la revendication 6, **caractérisé en ce qu'**il comprend une étape consistant à mesurer une pression différentielle afin de mesurer également la différence de pression entre l'air ambiant à l'extérieur du circuit de la machine et la pression dans un tuyau de distribution de celle-ci quand elle fonctionne et qui est reliée à l'environnement pour lequel elle est conçue pour fonctionner dans un circuit fermé, afin de commander l'étendue des pertes de charges causées par la longueur et la section transversale des tuyaux de raccordement.
